# EUROPEAN PATENT APPLICATION

(11) **EP 2 180 212 A1**
(43) Date of publication of application: **28.04.2010**
(21) Application number: 08792467.6
(22) Date of filing: 14.08.2008
(51) Int. Cl.: F16H 61/16, F16H 59/18, F16H 59/44, F16H 59/54, F16H 59/66, F16H 61/682

(54) **GEAR SHIFT CONTROLLER FOR VEHICLE TRANSMISSION**

(30) Priority: 17.08.2007 JP 2007212521
(71) Applicant: Isuzu Motors, Ltd., Shinagawa-Ku Tokyo 140-8722 (JP)
(72) Inventor: YAMAMOTO, Yasushi, Fujisawa-shi Kanagawa 252-8501 (JP); KAWANISHI, Hiroyuki, Fujisawa-shi Kanagawa 252-8501 (JP); SAKO, Tomohisa, Fujisawa-shi Kanagawa 252-8501 (JP); ABE, Makoto, Fujisawa-shi Kanagawa 252-8501 (JP); FUKUNAGA, Susumu, Fujisawa-shi Kanagawa 252-8501 (JP)
(74) Representative: MERH-IP Matias Erny Reichl Hoffmann
(86) International application number: PCT/JP2008/064586
(87) International publication number: WO 2009/025233

(57) **Abstract**

A vehicle mounting an engine and a transmission, and automatically controlling the transmission using a shift map, wherein shifting is executed to meet the traveling conditions of the vehicle and to ensure the braking force based on the engine brake as intended by the driver at the time of decelerating the vehicle. The transmission control unit has a shift map for determining the gear depending on the vehicle speed and the accelerator opening degree of the engine, and, further, has a mode-judging means for judging an acceleration mode period and a deceleration mode period depending on the operating conditions of an accelerator pedal and a brake pedal. In the deceleration mode period after the driver has depressed the brake pedal, the shift-up is prohibited (S9), and a gear region in the map for shift down is corrected in a direction in which the vehicle speed increases (S2, S3) to execute the shift-down early. In the deceleration mode period, therefore, the braking force based on the engine brake acts on the vehicle to a sufficient degree, and the frequency for operating the brake pedal by the driver can be decreased.

## Description

### Technical Field to which the Invention Belongs:

The present invention relates to a transmission control unit for automatically controlling, depending upon the vehicle traveling conditions, the gear of a transmission that has a plurality of gears and is mounted on a vehicle.

### Background Art:

In modern vehicles, a variety of devices have been designed to work automatically. The power transmission devices, too, have been developed to work automatically for easy driving of a vehicle and for reducing fatigue to the driver. A representative example will be an automatic transmission combining a torque converter and a planetary gear device together as has been widely used as the power transmission device for the so-called automatic vehicles (AT vehicles) . In addition to the automatic transmission, there has been known a power transmission device which uses a transmission of a type of parallel shaft gear mechanism similar to the so-called manual vehicle (MT vehicle) in combination with an automatic clutch to automatically shift the gear by using an electronic controller depending upon traveling conditions of the vehicle. The transmission which automatically shifts the gear by using the transmission of the type of parallel shaft gear mechanism is often called AMT. Hereinafter, this transmission is called "transmission of the type of parallel shaft gear mechanism of automatic shift control".

The torque converter of the automatic transmission involves a transmission loss and, besides, the planetary gear mechanism and its controller are complex and expensive. The transmission of the type of parallel shaft gear mechanism of automatic shift control is combined with an automatically operated clutch and features superior fuel economy of vehicle to the automatic transmission since it does not involve transmission loss that stems from the interposition of the torque converter. Besides, the constitution of this transmission and its control are simpler and more reliable than those of the automatic transmission. Therefore, trucks giving large importance on large load capacities and fuel economy tend to employ the transmission of the type of parallel shaft gear mechanism of automatic shift control which automatically shifts a gear by using an actuator.

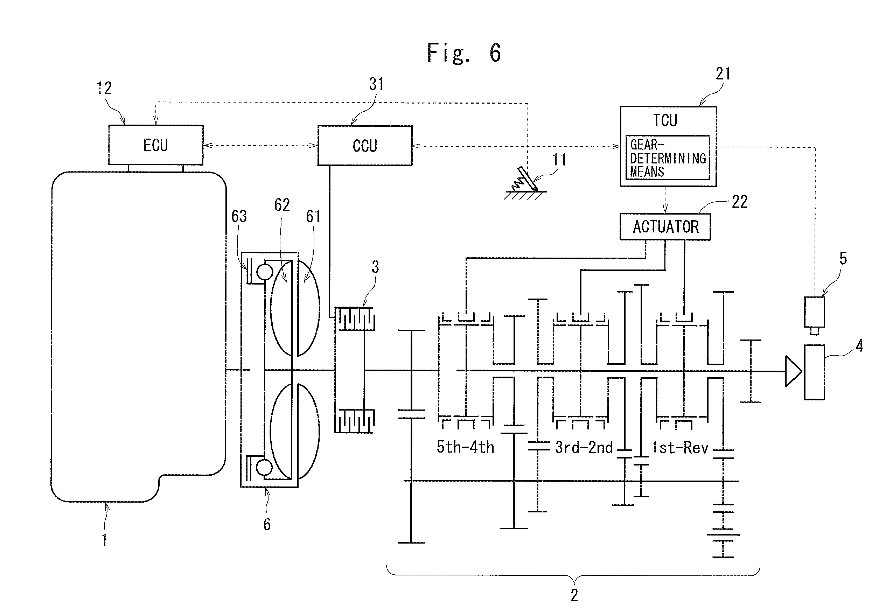

A power transmission device of a vehicle mounting a transmission which automatically shifts the gear will be briefly described in relation to whole controllers for various devices thereof with reference to Fig. 6.
A vehicle shown in Fig. 6 mounts, as a power transmission device, an engine 1 and a transmission 2, and a clutch (wet type multiple disk clutch) 3 is arranged between the two. The engine 1 in this case is a diesel engine equipped with a fuel injection pump and an engine control unit (ECU) 12 which varies an amount of fuel supply by controlling the fuel injection pump depending upon the amount the accelerator pedal 11 is depressed by a driver. Further, the transmission 2 in this case is a multi-speed transmission of the type of parallel shaft gear mechanism of automatic shift control, which is equipped with an actuator 22 that is controlled by a transmission control unit (TCU) 21 to shift the gear. The output shaft of the transmission 2 is finally coupled to the wheels 4 on which a vehicle speed sensor 5 is installed to detect the vehicle speed relying on the rotational speed thereof. The clutch 3 arranged in front of the transmission 2 has a clutch control unit (CCU) 31 which automatically connects and disconnects the clutch at the time of shifting the gear.

The power transmission device of Fig. 6 has a fluid coupling 6 interposed between the engine 1 and the clutch 3. Unlike torque converter, the fluid coupling 6 has no torque amplifying function. Upon interposing the fluid coupling 6, however, the vehicle can be smoothly started by utilizing the slip between the pump 61 and the turbine 62 in the fluid coupling. At a moment when the vehicle has reached a predetermined speed of about 10 km/h after the start, the pump 61 and the turbine 62 are fastened integrally together by a lock-up clutch 63, and the engine 1 is directly coupled to the clutch 3.

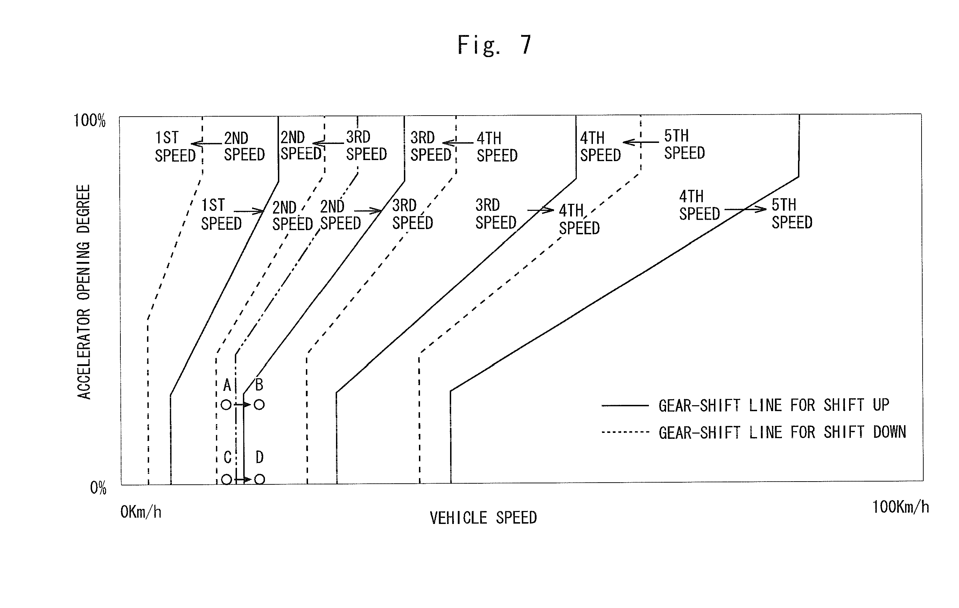

The transmission control unit 21 is equipped with a gear-determining means for determining a gear depending on the vehicle traveling conditions, and the gear-determining means stores a shift map as shown in Fig. 7 to determine a gear depending upon the vehicle speed and the accelerator opening degree of the engine (amount of the accelerator pedal depressed by the driver). The shift map determines the regions of the gears corresponding to the vehicle speeds and the accelerator opening degrees. When the traveling condition of the vehicle shifts to a region of an another gear exceeding the gear-shift line on the shift map, the gear-determining means outputs speed-change instructions, and the transmission control unit 21 operates the actuator 22 to change the gear. An optimum speed-change point when the vehicle is traveling differs depending upon the case of shift up in which a low-speed gear is shifted to a high-speed gear and the case of shift down in which a high-speed gear is shifted to a low-speed gear. Therefore, speed-change lines corresponding to the shift ups and the shift downs have been written into the shift map. In other words, the region of a target gear determined by the vehicle speed and the accelerator opening degree of the engine differs depending upon the case of shift up and the case of shift down, and the shift map includes a shift map for shift up and a shift map for shift down.

The gear-determining means that uses the shift map is employed not only by the transmission of the type of parallel shaft gear mechanism of automatic shift control shown in Fig. 6 but also by the automatic transmission. For example, JP-A-63-167162 discloses a shift controller for controlling the transmission of the type of parallel shaft gear mechanism by using a shift map and JP-A-2005-308096 discloses a shift controller for controlling the automatic transmission by using a shift map.
Patent document 1: JP-A-63-167162
Patent document 2: JP-A-2005-308096

### Disclosure of the Invention:

### Problems that the Invention is to Solve:

A vehicle is equipped with an accelerator pedal and a brake pedal, and a driver chiefly operates these pedals to adjust the speed of the vehicle. When it is desired to decelerate the vehicle, the driver removes his or her foot from the accelerator pedal (accelerator opening degree of 0%) to place the engine under the idling condition. In this case, the vehicle speed decreases due to the action of the braking force produced by the so-called engine brake. If the deceleration based on the engine brake is not sufficient, the driver depresses the brake pedal to further decrease the vehicle speed. The decelerating effect by the engine brake stems from the resistance of when the engine is driven by the wheels contrary to the case of driving the wheels, and the braking force produced by the engine brake is smaller when a high-speed gear is used than that of when a low-speed gear is used. In a state where the transmission of the vehicle is using a high-speed gear, therefore, deceleration of the vehicle by the engine brake tends to be delayed, and the driver may attempt to decelerate the vehicle by repetitively depressing the brake pedal.

To enhance the braking effect of the engine brake, it can be contrived to shift a high-speed gear to a low-speed gear while the vehicle speed is still high, i.e., to set a gear-shift point of the shift map for shift down to a position of an increased vehicle speed in Fig. 7. However, if a gear-shift line for shifting, for example, the third speed down to the second speed is moved in a direction in which the vehicle speed increases as represented by a two-dot chain line in the drawing, then a gear-shift line for shifting the second speed up to the third speed becomes close thereto. Therefore, if the vehicle speed varies even by small amounts as represented by a point A and a point B in the drawing due to changing conditions on the road surface on which the vehicle is traveling, the gear is shifted repetitively between the second speed and the third speed. To prevent this, a predetermined hysteresis is necessary between the gear-shift point for shift down and the gear-shift point for shift up, and the two points cannot be brought to be too close to each other.

Further, when traveling a downhill, the vehicle receives a driving force due to the weight of the vehicle, and the vehicle accelerates despite the foot is removed from the accelerator pedal to effect deceleration, often causing the gear to be shifted up. For example, if the vehicle traveling at the second speed under the condition of a point C in Fig. 7 is accelerated on the downhill and assumes the condition of a point D, then a third speed is assumed since the gear-shift point for shift up is exceeded. In this case, the braking effect of the engine brake decreases, and the vehicle further accelerates against the will of the driver. The driver, therefore, must repetitively depress the brake pedal to decelerate the vehicle.
The present invention has a problem of providing a transmission controller for automatically controlling a gear of a transmission by using a shift map, which executes a gear shift to meet the traveling condition of the vehicle and, at the time of decelerating the vehicle, maintains a braking force of the engine brake as intended by the driver.

### Means for Solving the Problems:

In view of the above problem, the present invention provides a transmission control unit for shifting the gear by using a shift map, wherein an acceleration mode period and a deceleration mode period are judged based on the operating conditions of a accelerator pedal and a brake pedal operated by a driver and, in the deceleration mode period, the gear-shift point for shift down is varied while prohibiting the shift up. Namely, the present invention is concerned with a transmission control unit for controlling the gear of a transmission mounted on a vehicle, wherein:
the vehicle is furnished with an accelerator detector for detecting the depression of an accelerator pedal and a brake detector for detecting the depression of a brake pedal;
the transmission control unit includes a gear-determining means for detecting a gear depending upon the speed of the vehicle and an accelerator opening degree of the engine mounted on the vehicle;
the gear-determining means has a shift map for shift up for determining a gear region at the time of shift up to a high-speed gear, and a shift map for shift down for determining a gear region at the time of shift down to a low-speed gear;
the transmission control unit, further, includes a mode-judging means for judging an acceleration mode period from when the accelerator pedal is depressed until when the brake pedal is depressed and a deceleration mode period from when the brake pedal is depressed until when the accelerator pedal is depressed based on input signals from the accelerator detector and the brake detector; and
in the deceleration mode period, shifting to a high-speed gear is prohibited, and the gear region that is determined by the shift map for shift down is corrected in a direction in which the vehicle speed increases.

As described in claim 2, the transmission control unit includes a gradient detector means for detecting the gradient of a road surface on which the vehicle travels, and executes the same control as that in the deceleration mode period when the road surface has a downhill gradient larger than a predetermined value.

### Effects of the Invention:

The transmission control unit of the present invention has a gear-determining means for determining a gear depending upon the speed of the vehicle and the accelerator opening degree of the engine, i.e., has a gear-determining means for determining a gear by using a shift map. When the vehicle is traveling, the gear is basically determined depending upon the vehicle speed and the accelerator opening degree. The transmission control unit of the present invention, further, has a mode-judging means for judging the acceleration mode period and the deceleration mode period depending upon the operations of the accelerator pedal and the brake pedal, and adjusts the gear that is determined by the gear-determining means depending upon the driver's operation of the vehicle. In the acceleration mode period from when the accelerator pedal is depressed until when the brake pedal is depressed, the so-called normal gear shift is executed as determined by the shift map. In this case, a predetermined hysteresis exists between a gear-shift point for shift down and a gear-shift point for shift up, and the repetition of gear shift (hunting) does not occur. In the deceleration mode period from when the brake pedal is depressed until when the accelerator pedal is depressed, on the other hand, shifting to a high-speed gear is prohibited, and the gear region that is determined by the shift map for shift down is corrected in a direction in which the vehicle speed increases.

When the brake pedal is depressed, it is so decided that the driver is willing to decelerate the vehicle. Therefore, the braking effect by the engine brake must be sufficiently ensured until the accelerator pedal is depressed. In the transmission control unit of the present invention, the shift to a high-speed gear is prohibited in the deceleration mode period and, therefore, no shift-up takes place and the braking effect of the engine brake does not decrease against the will of the driver. Besides, the gear region that is determined by the shift map for shift down is corrected in a direction in which the vehicle speed increases. Therefore, shifting to a low-speed gear is executed while the vehicle speed is still high, and an increased braking force or engine brake acts early in the deceleration mode period. Upon moving the gear-shift point for shift down in the direction in which the vehicle speed increases, the gear-shift point for shift up becomes close thereto. In the deceleration mode period, however, the shift-up is prohibited, and the hunting of gear shift does not occur.
With the transmission control unit of the present invention as described above, the vehicle in the deceleration mode period decelerates as intended by the driver, and the brake pedal does not have to be repetitively operated avoiding such an inconvenience that the brake device is overheated due to a frequent use.

When traveling downhill, the vehicle accelerates due to the weight of the vehicle. If the driver once releases his or her foot from the accelerator pedal and operates the brake pedal, the transmission control unit of the present invention executes the gear shift in the deceleration mode period. Therefore, even if the vehicle speed on the downhill increases to exceed the gear-shift point for shift up, shifting to a high-speed gear is prohibited, and the shift down is executed early at a moment when the vehicle speed is still high. Accordingly, the braking effect of the engine brake is ensured making it possible to prevent the occurrence of abnormal conditions in the brake device of the vehicle, such as fade phenomenon caused by frequent operation of the brake pedal on the downhill.
The present invention of claim 2 is so constituted as to detect the gradient of the road surface on which the vehicle travels by using gradient detector means, wherein when the road surface has a downhill gradient larger than a predetermined value, the same control as that of the deceleration mode period is executed. When traveling the downhill, therefore, the above gear shift is automatically executed even if the brake pedal is not depressed by the driver.

### Brief Description of the Drawings:

[Fig. 1] is a diagram schematically illustrating a power transmission device for a vehicle to which a transmission control unit of the present invention is applied.
[Fig. 2] is a diagram illustrating a method of judging the mode of the transmission control unit of the present invention.
[Fig. 3] is a flowchart illustrating the operation of the transmission control unit of the present invention.
[Fig. 4] is a diagram showing a map of shift down in a deceleration mode period.
[Fig. 5] is a modified example of the flowchart of Fig. 1.
[Fig. 6] is a diagram illustrating the power transmission device and the control unit therefor of a vehicle.
[Fig. 7] is a diagram showing a general map for shifting in a transmission control unit.

### Description of Reference Numerals:

- 1 -: engine
- 11 -: accelerator pedal
- 13 -: accelerator switch
- 2 -: transmission
- 21 -: transmission control unit
- 3 -: clutch
- 31 -: clutch controller
- 5 -: vehicle speed sensor
- 7 -: brake pedal
- 71 -: brake switch
- S1 to S11(S01 to S03) -: steps in the control flow

### Best Mode for Carrying Out the Invention:

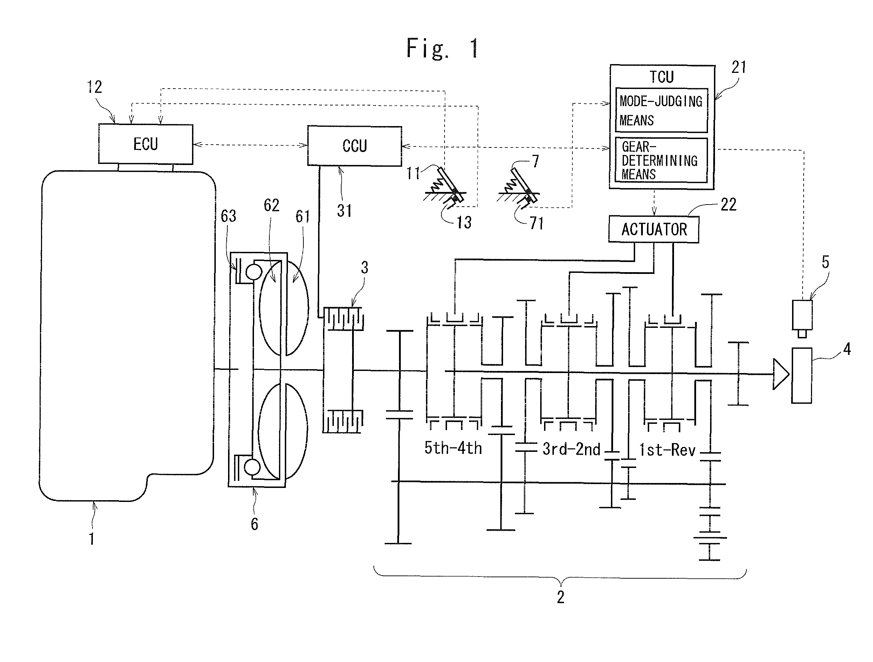

An embodiment of the transmission control unit of the present invention will now be described with reference to the drawings. In the embodiment of Fig. 1, the present invention is applied to a transmission of the type of parallel shaft gear mechanism of automatic shift control, and in which the basic constitution of the power transmission device of the vehicle and operations of various devices thereof are the same as those of the conventional art shown in Fig. 6 (in Fig. 1, parts corresponding to those of Fig. 6 are denoted by the same reference numerals). That is, upon receipt of a signal from a vehicle speed sensor 5 of the vehicle and a signal representing the accelerator opening degree of the engine (amount of the accelerator pedal 11 depressed by the driver), the transmission control unit 21 of the present invention determines a gear by using a shift map which is the same as the one shown in Fig. 7 based on the vehicle speed and the accelerator opening degree. Upon receipt of a gear shift signal from the transmission control unit 21, an actuator 22 changes the gear of a transmission 2.

The transmission control unit 21 of the present invention has a mode-judging means for judging an acceleration mode period and a deceleration mode period responsive to the accelerator pedal and the brake pedal operated by the driver. To judge the mode, the transmission control unit 21 receives a signal from an accelerator switch 13 which is an accelerator detector for detecting the depression of the accelerator pedal 11 and a signal from a brake switch 71 which is a brake detector for detecting the depression of the brake pedal 7. The signals of the two switches are turned on when the pedals are depressed and are turned off when the foot is released. The signal from the accelerator switch 13 may also be used for judging if the accelerator opening degree is 0%.

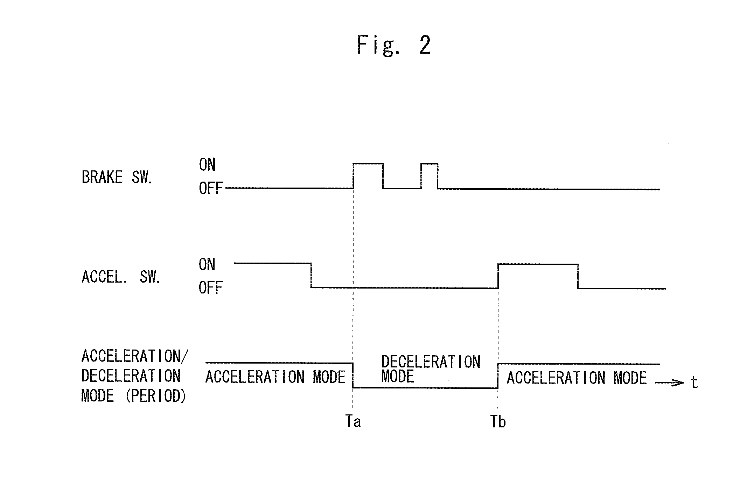

Referring to Fig. 2, after the accelerator pedal 11 is depressed, the mode-judging means judges the period until a moment Ta the brake pedal 7 is depressed to be an acceleration mode period. Once the brake pedal 7 is depressed, the period is judged to be a deceleration mode period. The deceleration mode period lasts even if the brake pedal 7 has not been depressed until the accelerator pedal 11 is depressed. After the accelerator pedal 11 is depressed at a moment Tb, the period is shifted to the acceleration mode period again.

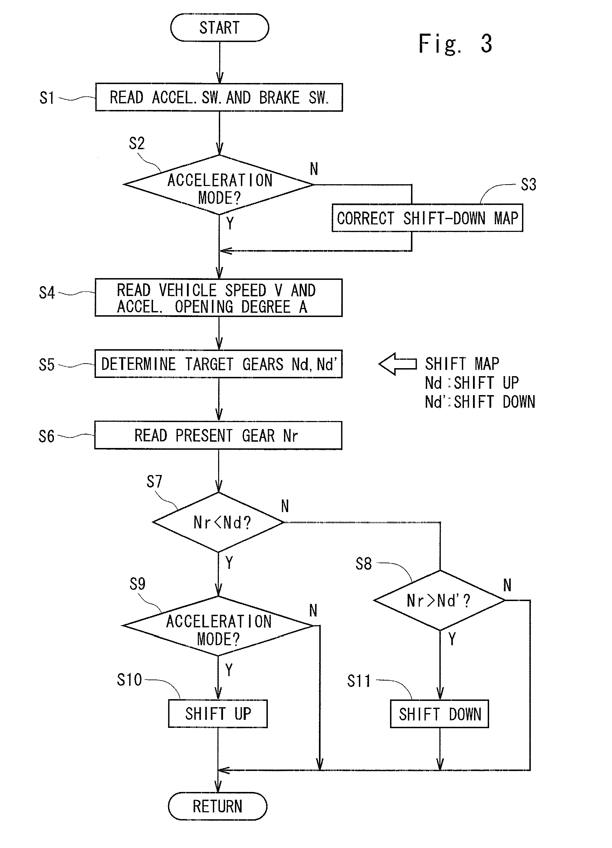

In order to ensure the braking effect of the engine brake expected by the driver, the transmission control unit of the present invention, in the deceleration mode period, prohibits the shift up and quickens the shift down. The constitution and operation will now be described with reference to a flowchart of Fig. 3.
Upon the start of flow for controlling the gear in Fig. 3, signals from the accelerator switch and the brake switch are read at step S1, and if the vehicle is now under the condition of the acceleration mode period or the deceleration mode period is judged at step S2 based on these signals. Steps S1 and S2 constitute the mode-judging means of the present invention.

If it is so judged at step S2 that the vehicle is under the condition of the acceleration mode period, i.e., the accelerator pedal is depressed but the brake pedal has not been depressed, the routine proceeds to step S4 where a vehicle speed V detected by the vehicle speed sensor and the accelerator opening degree A detected by the accelerator sensor are read. Next, at step S5, a target gear is determined depending upon the vehicle speed V and the accelerator opening degree A that are read by using a shift map stored in the control unit. In the acceleration mode period, the shift map used in the present invention is the same as the shift map shown in Fig. 7 of the conventional transmission control unit, and in which gear-shift points for shift ups and gear-shift points for shift downs are so written as to include a predetermined hysteresis. The region of the target gear differs depending upon the shift map for shift ups and the shift map for shift downs. At step S5, therefore, a target gear Nd for shift up and a target gear Nd' for shift down are determined, respectively. Steps S4 and S5 constitute the gear-determining means of the present invention.

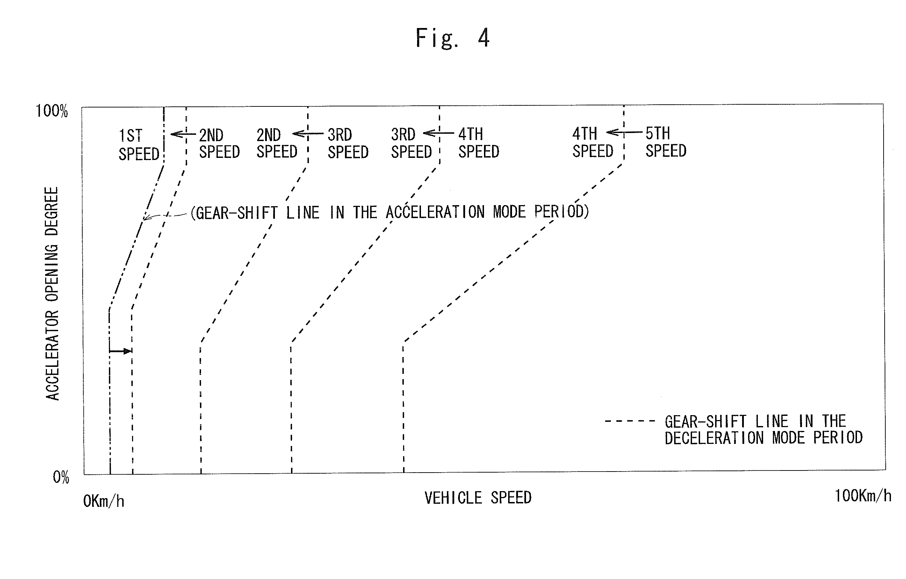

On the other hand, if it is so judged at step S2 that the vehicle is under the condition of a period which is not the acceleration mode period, i.e., under the condition of the deceleration mode period in which the accelerator pedal has not been depressed after the brake pedal was depressed, the routine proceeds to step S3 where the shift map for determining a target gear is corrected in advance. This correction is to move the gear-shift point in the shift map for shift downs toward the side of increased vehicle speed (to determine a target gear for shift down by subtracting the corrected amount of vehicle speed from the real vehicle speed) as shown in Fig. 4 without changing the shift map for shift ups. As means for effecting the above correction, a dedicated map may be separately provided as shown in Fig. 4 and may be used by switching the routine thereto. Upon moving the gear-shift point toward the side of increased vehicle speed, the gear region determined by the shift map for shift down is corrected in a direction in which the vehicle speed increases. In the deceleration mode period, therefore, the target gear Nd' for shift down is determined at step S5 by using the corrected shift map for shift down.

At step S6, the present gear Nr which is now in use for traveling the vehicle is read and at steps S7 and S8, target gears Nd and Nd' determined by the gear-determining means are compared with the present gear Nr.
At step S7, it is decided if the target gear Nd for shift up determined based on the vehicle speed V and the accelerator opening degree A is higher than the present gear Nr. If the decision at step S7 is "yes", the routine proceeds to step S9 where it is decided if the vehicle judged at step S2 is under the condition of the acceleration mode period or the deceleration mode period. If the vehicle is under the condition of acceleration mode period, the routine proceeds to step S10 where the transmission control unit outputs shift-up instructions. If the vehicle is under the condition of deceleration mode period, however, the flow ends without producing instructions, and shifting up to a high-speed gear is prohibited.

If the decision at step S7 is negative, then it is decided at step S8 if the target gear Nd' for shift down is lower than Nr. If Nd' is lower than Nr, the routine proceeds to step S11 where the transmission control unit produces shift-down instructions. Here, if the vehicle is in the deceleration mode period, the shift down is instructed at a moment when the vehicle speed is higher than that in the acceleration mode period, i.e. , at an early time when the vehicle is decelerating, since the target gear Nd' is determined by the map for shift down. If the decision at step S8 is negative, the present gear needs to be neither shifted up nor shifted down. Therefore, the flow ends without producing speed-change instructions.

As described above, the transmission control unit of the present invention judges the acceleration mode period and the deceleration mode period depending upon the driver's operation of the accelerator pedal and the brake pedal (step S1, step S2), and executes the so-called normal shift determined according to the shift map in the acceleration mode period of from when the accelerator pedal is depressed until when the brake pedal is depressed. In the deceleration mode period of from when the brake pedal is depressed until when the accelerator pedal is depressed, on the other hand, shifting to a high-speed gear is prohibited (step S9) and, besides, the gear region determined by the shift map for shift down is corrected in the direction in which the vehicle speed increases (step S3).

In the deceleration mode period in which the driver depresses the brake to decelerate the vehicle, shifting to a high-speed gear is prohibited and, therefore, the braking effect based on the engine brake does not decrease against the will of the driver. Besides, since the gear region determined by the shift map for shift down is corrected in the direction in which the vehicle speed increases, shifting to a low-speed gear is executed while the vehicle speed is still high. Therefore, the transmission control unit of the present invention ensures the braking effect based on the engine brake in the deceleration mode period as intended by the driver, eliminating the need of repetitively operating the brake pedal and preventing the brake device from being overheated due to frequent use.

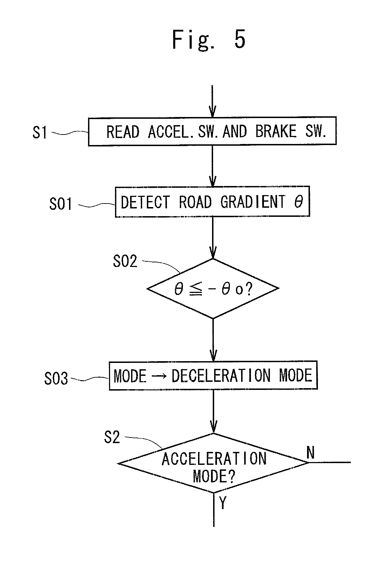

When traveling downhill, the speed of the vehicle increases due to the weight of the vehicle. It is, therefore, particularly desired to ensure the braking force by utilizing the engine brake. The flowchart shown in Fig. 5 is a control flow for executing the control which is the same as that in the deceleration mode period on the downhill.
The flow of Fig. 5 is a procedure for setting a mode depending on the gradient of the road surface, which is placed between step S1 and step S2 in the flowchart of Fig. 3. At step S01, the gradient θ of the road surface on which the vehicle travels is found by arithmetic operation and at step S02, it is decided if the road surface has a downhill gradient larger than a predetermined value, i.e., if the gradient θ is smaller than a predetermined value -θ₀. If the road surface has a downhill gradient larger than a predetermined value, the vehicle at step S03 is set to be under the condition of deceleration mode period irrespective of the operations of the accelerator pedal and the brake pedal. At step S2, therefore, it is judged that the vehicle is under the condition of deceleration mode period, and the same control as that in the deceleration mode period is executed. If the gradient of the road surface is not the downhill gradient larger than a predetermined value, the mode is judged in the same manner as by the above judging method depending on the operations of the accelerator pedal and the brake pedal read at step S1.

Upon adding the flow of Fig. 5, if the gradient of the road surface is a downhill gradient larger than a predetermined value, the transmission is automatically shifted to a gear of the deceleration mode period even if the brake pedal is not depressed by the driver, and the braking effect based on the engine brake is obtained to a sufficient degree. Here, as is well known, the gradient of the road surface can be calculated by furnishing the vehicle with a vehicle speed sensor for detecting the vehicle speed and an acceleration sensor for detecting the acceleration, and by comparing the acceleration obtained by differentiating the vehicle speed detected by the vehicle speed sensor with the acceleration detected by the acceleration sensor.

### Industrial Applicability:

As described above in detail, the present invention provides a transmission control unit for shifting the gear by using a shift map, wherein the acceleration mode period and the deceleration mode period are judged based on the operating conditions of the accelerator pedal and the brake pedal operated by the driver and, in the deceleration mode period, the gear-shift point for shift down is varied while prohibiting the shift up to obtain a sufficiently large braking force based on the engine brake. Therefore, the transmission control unit of the present invention can be applied to either an automatic transmission or a transmission of the type of parallel shaft gear mechanism of automatic shift control if it is furnished with a control unit that utilizes a shift map. Further, the above embodiment detects the depression of the brake pedal. The embodiment, however, can be modified in various ways such as judging the operating condition of the brake pedal by detecting the operation fluid pressure such as the one in a brake master cylinder.

## Claims

1. A transmission control unit for controlling the gear of a transmission mounted on a vehicle, wherein:
said vehicle is furnished with an accelerator detector for detecting the depression of an accelerator pedal and a brake detector for detecting the depression of a brake pedal;
said transmission control unit includes a gear-determining means for determining a gear depending upon the speed of said vehicle and an accelerator opening degree of a engine mounted on said vehicle;
said gear-determining means has a shift map for shift up for determining a gear region at the time of shifting up to a high-speed gear, and a shift map for shift down for determining a gear region at the time of shifting down to a low-speed gear;
said transmission control unit, further, includes a mode-judging means for judging an acceleration mode period from when the accelerator pedal is depressed until when the brake pedal is depressed and a deceleration mode period from when the brake pedal is depressed until when the accelerator pedal is depressed based on input signals from said accelerator detector and said brake detector; and
in said deceleration mode period, shifting to a high-speed gear is prohibited, and the gear region that is determined by said shift map for shift down is corrected in a direction in which the vehicle speed increases.

2. The transmission control unit according to claim 1,
wherein said transmission control unit includes a gradient detector means for detecting the gradient of a road surface on which said vehicle travels, and executes the same control as that in said deceleration mode period when the road surface has a downhill gradient larger than a predetermined value.
